# EUROPEAN PATENT SPECIFICATION

(11) **EP 2 771 238 B1**
(45) Date of publication and mention of the grant of the patent: **26.08.2015**
(21) Application number: 12791288.9
(22) Date of filing: 24.10.2012
(51) Int. Cl.: B64C 3/52

(54) **AERODYNAMIC PROFILE WITH VARIABLE TWIST AND PITCH**
AERODYNAMISCHES PROFIL MIT VERSTELLBARER VERDREHUNG UND VERSTELLBAREM ANSTELLWINKEL
PROFIL AÉRODYNAMIQUE À TORSION ET PAS VARIABLES

(30) Priority: 28.10.2011 IT TO20110981
(43) Date of publication of application: 03.09.2014
(73) Proprietor: Politecnico di Torino, 10129 Torino (IT)
(72) Inventor: GIL, Piero, I-10129 Torino (IT); FRULLA, Giacomo, I-10129 Torino (IT)
(74) Representative: Garavelli, Paolo
(86) International application number: PCT/IT2012/000326
(87) International publication number: WO 2013/061351

(56) References cited:
- FR-A1- 2 924 681
- GB-A- 565 634
- US-A- 5 681 014
- US-A1- 2006 022 085
- US-A1- 2008 149 779

## Description

The present invention refers to an aerodynamic profile with variable twist.

Aerodynamic profiles, and in particular propeller blades, with fixed pitch with constant twist, are known in the art and, consequently, are optimised for a single operating ratio, meant as ratio between blade translation speed and blade rotation speed.

Aerodynamic profiles with variable pitch are also known in the art and, though keeping the twisting law unchanged along their opening, they increase their efficiency, when the operating ration changes, with respect to fixed-pitch propellers, without however reaching the optimum value.

Profiles are further known that provide for the use of systems exploiting the characteristics of the so-called currently available "smart materials", namely systems that, through electromechanic, piezoelectric or shape-memory actuation, allow modifying the position and/or shape of structural elements, and in particular the profile portion with respect to wind, by keeping its shape.

The art anyway proposes profiles aiming to improve functionality and performance of rotors in general.

Examples of the above profiles are disclosed in CA-A1-2429600, CN-A-1439576, US-A-5730581, US-A-6648599, US-A1-2002018716, WO-A2-0041501, US-A-6371415, EP-A-1788646, US-A-5505589, DE-A-1531475, US-A-4680923, US-A1-20110064579, US-A1-20100258680, US-A-5137228, US-A-5681014, which is considered the closest prior art, US-A1-2008/149779, GB-A-565634, US-A1-2006/022085 and FR-A1-2924681.

In particular:
- CA2429600A1 very generically discloses the use of actuators to vibrate the surface layer of a structure for miscellaneous uses;
- CN-A-1439576, US-A-5730581, US-A-6648599, US-A1-2002018716 and WO-A2-0041501 disclose the use of piezoelectric or other actuators to modify the twist of blades, or a portion thereof, of helicopter rotors in order to modify its pitch only changing the profile curvature by actuating a flap;
- US-A-6371415 discloses the use of piezoelectric actuators applied to an aerodynamic surface to simulate a classical moving control surface (of the wing aileron type);

- EP-A-1788646 very generally discloses a system that uses piezoelectric actuators to generate a torsion in a sandwich structure;
- US-A-5505589 discloses the twist control of a blade by managing the eccentric mass position that, due to the centrifugal force, positions the portion at a certain incidence angle;
- DE-A-1531475 discloses the use of a coating suitable to be twisted, that engages a series of ribs that are keyed onto an hpropellerl profile, allowing the reference portion to rotate when the whole coating is moved along the opening;
- US-A-4680923 discloses an elastic coupling structure composed of filaments twisted according to a certain scheme and polymerised, that allow, through their distortion under load due to a suitable stress, generating a rotation of the structure itself;
- US-A1-20110064579 discloses the use of a thin coating with open portion that allows, by moving the two free edges, generating a portion rotation around an axis parallel to the element opening;
- US-A1-20100258680 and FR-A1-2914681 disclose the portion rotation through two, piezoelectric and electromechanic/hydropneumatic shear moving devices and the presence of a flexible coating with open portion, where the free edges are moved along the opening direction;
- US-A-5137228 discloses movements that apply the principle of the axially-moved open portion to generate a rotation and wherein the actuation occurs through levers from the hub;
- US-A-5681014, US-A1-2008/149779, GB-A-565634 and US-A1-2006/022085 disclose aerodynamic profiles whose purpose is modifying the angular position related to wind, defined by the twisting angle, of a section of wing or carrier profile: such modification is carried out with functionally and structurally different actuating systems with respect to the ones of the present Application.

Object of the present invention is providing an aerodynamic profile with variable twist that allows obtaining a more efficient operation from the efficiency point of view through alternative actuating systems with respect to those proposed by the prior art as defined by the features of claim 1.

Another object of the present invention is providing an aerodynamic profile that, in addition to being with variable pitch, is also with variable twist, to allow obtaining an optimised operation from the efficiency point of view.

Moreover, an object of the present invention is providing a portion of aerodynamic profile in which twist is variable continuously and differently, spot by spot, along the opening of the portion itself.

Another object of the present invention is providing an aerodynamic profile in which twist can be variable according to a twisting law that is function of the opening of the profile itself, therefore changing with the operating ratio, obtaining a maximum efficiency for all possible operating ratios.

The above and other objects and advantages of the invention, as will appear from the following description, are obtained with an aerodynamic profile with variable twist as claimed in claim 1. Preferred embodiments and non-trivial variations of the present invention are the subject matter of the dependent claims.

It is clear that the enclosed claims form an integral part of the present description.

It will be immediately obvious that numerous variations and modifications (for example related to shape, sizes, arrangements and parts with equivalent functionality) could be made to what is described, without departing from the scope of the invention as will appear from the enclosed claims.

The present invention will be better described by some preferred embodiments thereof, provided as a non-limiting example, with reference to the enclosed drawings, in which:

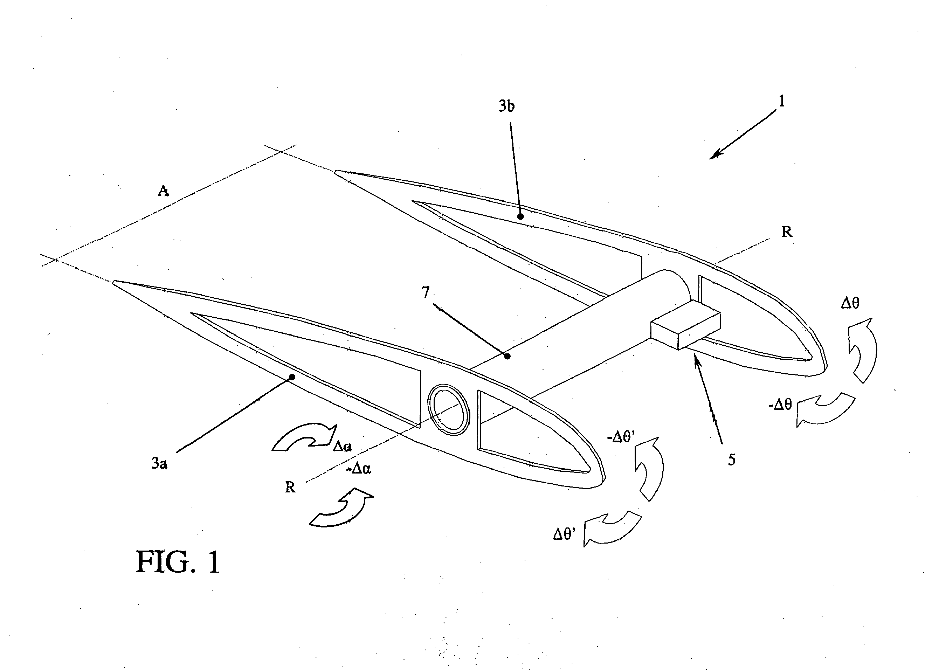

- Figure 1 shows a schematic, top perspective view of a preferred embodiment of the aerodynamic profile with variable twist according to the present invention;
- Figure 2 shows a side view of a preferred variation of the aerodynamic profile with variable twist according to the present invention;
- Figure 3 shows a front perspective view of another preferred variation of the aerodynamic profile with variable twist according to the present invention;
- Figure 4 shows a front perspective view of a further preferred variation of the aerodynamic profile- with variable twist according to the present invention;
- Figure 5 shows a front perspective view of another preferred variation of the aerodynamic profile with variable twist according to the present invention; and
- Figure 6 shows a side view of a further preferred variation of the aerodynamic profile with variable twist according to the present invention.

In general, in the following description, twist variability will mean the possibility of changing the relative twist of various aerodynamic portions composing at least one aerodynamic profile along the opening of the profile itself.

With reference to the Figures, it is possible to note that the aerodynamic profile according to the present invention comprises at least one portion of aerodynamic profile 1 composed of at least one first supporting profile 3a and at least one second supporting profile 3b adapted to support at least one layer of coating material (not shown) of such portion of aerodynamic profile 1, such portion of aerodynamic profile 1 further comprising at least first actuating means 5 adapted to cooperate with at least one of such supporting profiles 3a or 3b, for example the second profile 3b, to modify |Δθ| a value of incidence |θ| of such profile 3b related to the other supporting profile 3a around at least one rotation axis R-R parallel to the opening A of such portion of aerodynamic profile 1.

In this case, the first supporting profile 3a remains therefore fixed with respect to the second supporting profile 3b, that instead can be rotated by first actuating means 5 around the rotation axis R-R by a variable value |Δθ| along both rotation directions -θ or θ, changing the twist of the portion of aerodynamic profile 1.

In addition, it is possible to provide that the portion of aerodynamic profile 1 comprises both the first actuating means 5 adapted to cooperate with at least one of such supporting profiles 3a or 3b, for example the second profile 3b, to modify |Δθ| the value of incidence |θ| of such profile 3b, and second actuating means (not shown), adapted to cooperate with the other supporting profile 3b or 3a, for example the first profile 3a, to modify |Δθ'| a value of incidence |θ'| of such profile 3a with respect to the other supporting profile 3b around the rotation axis R-R parallel to the opening A of such portion of aerodynamic profile 1.

In this case, both the first supporting profile 3a and the second supporting profile 3b are rotated one with respect to the other around the rotation axis R-R by a related variable value |Δθ'|,|Δθ| along both respective rotation directions -θ', θ' or -θ, θ by their corresponding actuating means, changing the twist of the portion of aerodynamic profile 1.

In addition, it is possible to provide that the portion of aerodynamic profile 1 is rotated around such rotation axis R-R to modify |Δα| the pitch value |α| of the portion of aerodynamic profile 1 itself: in a first possible embodiment, both such first and such second actuating means rotate therefore their respective supporting profile 3a, 3b by the same angle |Δα| as sign and absolute value: such solution can be appreciated and applicable in case of relatively small increases or decreases |Δα| of the pitch value |α|.

In an alternative embodiment, it is possible to provide that the portion of aerodynamic profile 1 cooperates with third actuating means, such third actuating means being adapted to wholly rotate such portion of aerodynamic profile 1 around the rotation axis R-R to modify |Δα| the pitch value |α| of the portion of aerodynamic profile 1. In this case, therefore, the whole portion of aerodynamic profile 1 is rotated, by the third actuating means, around the rotation axis R-R by a variable value |Δα| along both respective rotation directions -α or α, consequently changing the pitch of the portion of aerodynamic profile 1.

Advantageously, therefore, by suitably changing the twist |Δθ'| and/or |Δθ| and/or the pitch |Δα|, it is possible to provide the portion of aerodynamic profile 1 with an optimised aerodynamic shape, from the efficiency point of view, for any condition or operating ratio and variable, even continuously in time, when such condition or ratio changes.

Obviously, therefore, the absolute values |Δθ'|, |Δθ| and |Δα| can be wholly variable and preferably function of the optimum aerodynamic shape that has to be given to the portion of aerodynamic profile 1.

According to the invention, as it is possible to note in the Figures, each supporting profile 3a, 3b is at least one rib suitably shaped in order to profile the suitable shape of the portion of aerodynamic profile 1, such profiles being structurally joined by at least one supporting spar 7 coaxial with the rotation axis R-R. In particular, at least one end of such spar 7 is operatively connected to third actuating means to allow the rotation -Δα, Δα for modifying the pitch. Obviously, the layer of coating material (not shown) of the portion of aerodynamic profile 1 is made of any material suitable to be both resistant and deformable to torsion and to traction / compression in order to allow the changes of twist |Δθ'|,|Δθ| of the portion of aerodynamic profile 1.

Obviously, the aerodynamic profile according to the present invention can be composed of a plurality of portions of aerodynamic profile 1 like the one described above, such portions of aerodynamic profile 1 being mutually connected and arranged in series along the common rotation axis R-R.

In a possible embodiment thereof, the aerodynamic profile according to the present invention can be a blade of an aeronautic propeller or the blade of a windmill. In the first case, the propeller obtains the optimum efficiency when the operating ratio changes, and therefore when the whole flight envelope of the airplane on which it is assembled, changes.

In the second case, the propeller keeps constant the optimum operating ratio for the type of windmill on which it is assembled (the one that allows more shortly approaching the theoric Betz limit), namely the propeller changes its twist so that, when wind is actually present, the number of rotation revolutions determines the optimum operating ratio. More in general, the aerodynamic profile according to the present invention can advantageously allow controlling (regarding rotation speed, vibration amplitude, resisting torque) any generic rotary member subjected to aerodynamic actions, such as propellers, rotors, fans, windmills.

Alternatively, the aerodynamic profile can be an actual wing profile. In this case, advantageously, the aerodynamic profile according to the present invention, due to its variable twist given by the wind along its opening, allows reaching further different purposes, such as, for example, controlling aero-elastic distortions, controlling vibrations of an aero-elastic nature, manoeuvring the airplane of which the wing is a member, etc.

The actuating means can obviously be of any type suitable for the object of the present invention, in order to allow variations of twist |Δθ'|, |Δθ| and pitch |Δα| of the portion of aerodynamic profile 1.

For example, the actuating means can indifferently be of an electric, electromechanical, piezoelectric, pneumatic or SMA (Shape Memory Alloy) type.

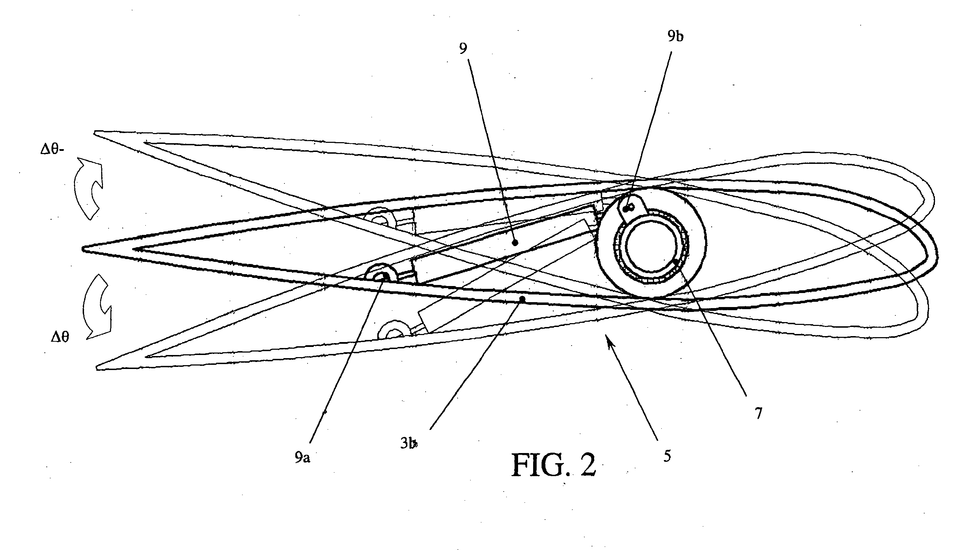

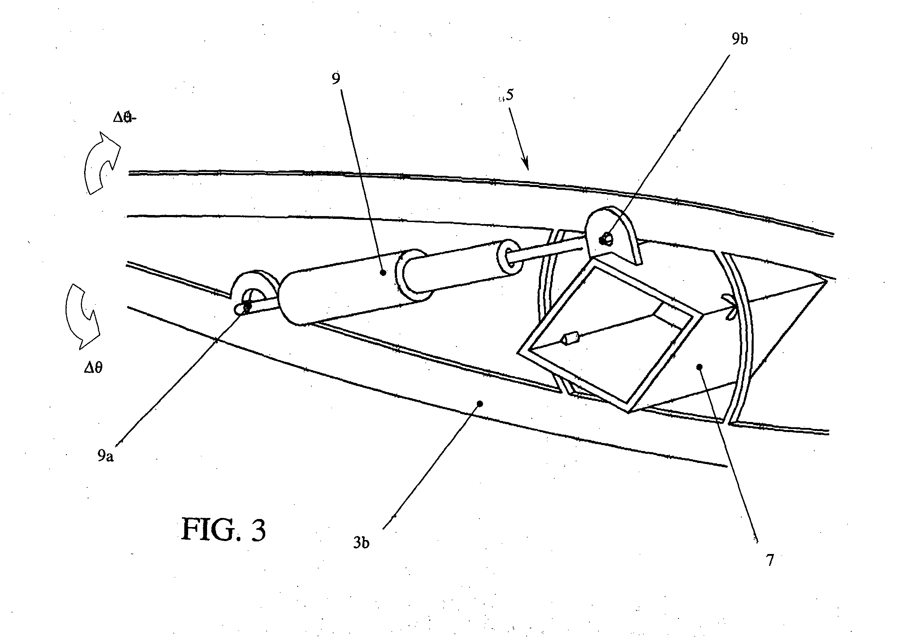

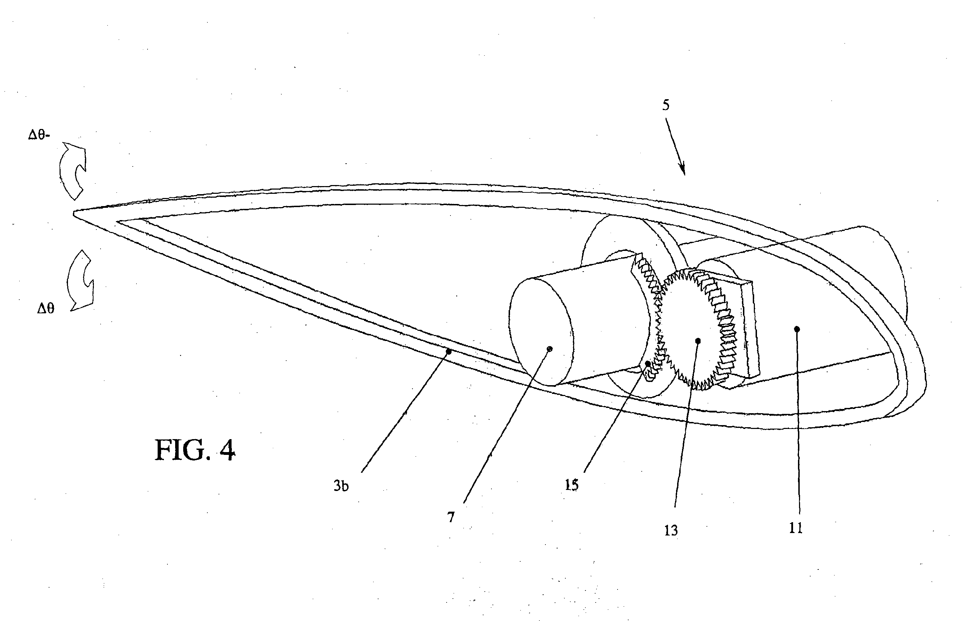

In particular, the first and second actuating means can apply an actuation of the linear type (such as, for example, the embodiments shown in Figures 2 and 3) or of the rotary type (such as, for example, the embodiments shown in Figures 4, 5 and 6).

For example, with reference to Figures 2 and 3, it is possible to note that the first 5 and/or second actuating means can comprise at least one linear actuator 9, such as for example a pneumatic, hydraulic, oleodynamic piston, etc., having a first end 9a suitably connected to its related supporting profile, for example the second supporting profile 3b, and a second end 9b suitably connected to the spar 7: the extension or shortening of such linear actuator 9 therefore generates the simultaneous rotation -Δθ, Δθ of the supporting profile 3b around the rotation axis R-R, and in particular around the spar 7 of the cylindrical type, like the one shown for example in Figure 2.

Alternatively, as shown for example in Figure 3, the spar 7 can have a polygonal portion.

With reference instead to Figure 4, it is possible to note that the first 5 and/or second actuating means can comprise at least one motor 11 integral with its related supporting profile, for example the second supporting profile 3b, such motor 11 having at least one driving crown 13 meshing with at least one sector 15 of driven crown integral with the spar 7 and having a rotation axis coincident with the rotation axis R-R, such supporting profile being therefore rotating -Δθ, Δθ around such spar 7 under the rotation action of the driving crown 13 imposed by the motor 11.

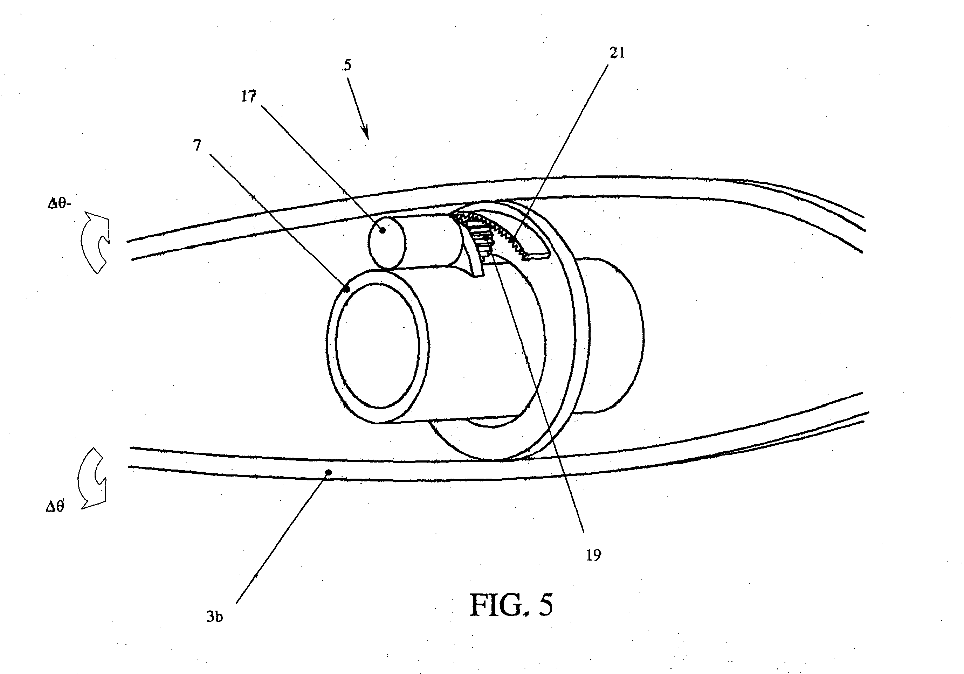

With reference instead to Figure 5, it is possible to note that the first 5 and/or second actuating means can comprise at least one motor 17 integral with the spar 7, such motor 17 having at least one driving crown 19 meshing with at least one sector 21 of driven crown integral with its related supporting profile, for example the second supporting profile 3b, and having a rotation axis coincident with the rotation axis R-R, such supporting profile being therefore rotating -Δθ, Δ around such spar 7 under the rotation action of the driving crown 19 imposed by the motor 17.

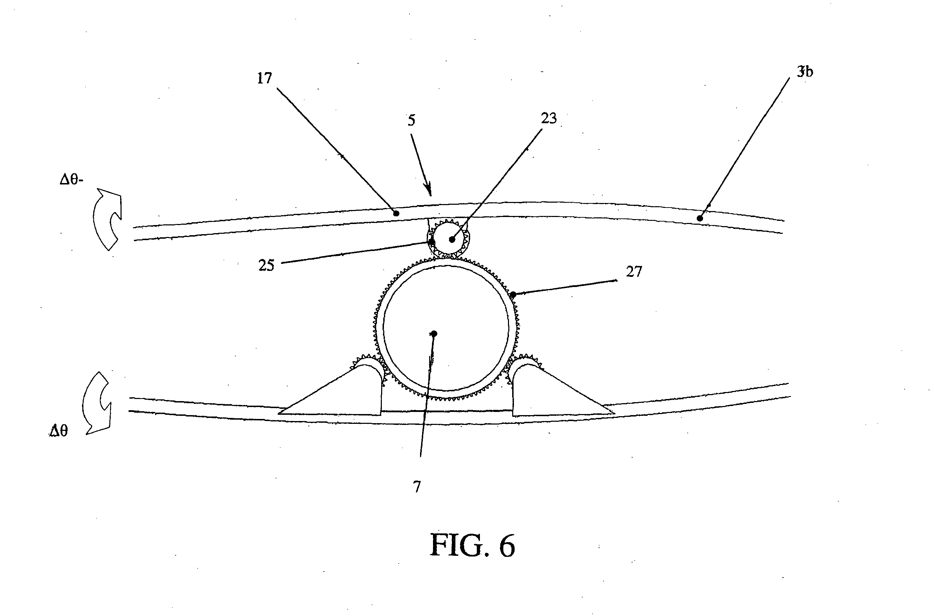

With reference instead to Figure 6, it is possible to note that the first 5 and/or second actuating means can comprise at least one motor 23 integral with its related supporting profile, for example the second supporting profile 3b, such motor 23 having at least one driving crown 25 meshing with at least one driven crown 27 integral with the spar 7 and having a rotation axis coincident with the rotation axis R-R, such supporting profile being therefore rotating -Δθ, Δθ around such spar 7 under the rotation action of the driving crown 25 imposed by the motor 23: in such embodiment, moreover, the supporting profile cooperates with the spar 7 by interposing at least two idle crowns 29 connected to the supporting profile and meshing with such driven crown 27.

## Claims

1. Aerodynamic profile comprising at least one portion of aerodynamic profile (1) composed of at least one first supporting profile (3a) and at least one second supporting profile (3b) supporting at least one layer of coating material of said portion of aerodynamic profile (1) and said layer of coating material is made of a resistant material which is deformable by torsion and traction/compression; said portion of aerodynamic profile (1) further comprising at least first actuating means (5) adapted to cooperate with at least one of said supporting profiles (3a) or (3b) to modify |Δθ| a value of incidence |θ| of said profile with respect to the other supporting profile around at least one rotation axis (R-R) parallel with an opening (A) of said portion of aerodynamic profile (1), said supporting profile (3a, 3b) is at least one rib shaped in order to profile a suitable shape of said portion of aerodynamic profile (1); said supporting profiles (3a, 3b) are structurally joined by at least one supporting spar (7) coaxial with said rotation axis (R-R);**characterised in that**:
the aerodynamic profile further comprising third actuating means said portion of aerodynamic profile (1) cooperates with the third actuating means adapted to integrally rotate said portion of aerodynamic profile (1) around said rotation axis (R-R) to modify |Δα| a pitch value |α| of said portion of aerodynamic profile (1); at least one end of said spar (7) is operatively connected to said third actuating means to allow said rotation (-Δα, Δα) to modify said pitch.

2. Aerodynamic profile according to claim 1, **characterised in that** said portion of aerodynamic profile. (1) comprises said first actuating means (5) adapted to cooperate with at least one of said supporting profiles (3a) or (3b) to modify |Δθ| said value of incidence |θ| of said profile (3b), and **in that** said portion of aerodynamic profile (1) comprises second actuating means adapted to cooperate with the other one of said supporting profiles (3b) or (3a) to modify |Δθ'| a value of incidence |θ'| of said profile (3a) with respect to the other supporting profile (3b) around said rotation axis (R-R).

3. Aerodynamic profile according to claim 2, **characterised in that** both said first and said second actuating means are adapted to rotate a respective supporting profile (3a, 3b) by a same angle |Δα| to modify a pitch value |α| of said portion of aerodynamic profile (1).

4. Aerodynamic profile according to any one of the previous claims, **characterised in that** it is composed of a plurality of said portions of aerodynamic profile (1) mutually connected and arranged in series along a common rotation axis (R-R).

5. Aerodynamic profile according to any one of the previous claims, **characterised in that** it is a blade of an aeronautic or windmill propeller.

6. Aerodynamic profile according to any one of claims 1 to 4, **characterised in that** it is a wing profile.

7. Aerodynamic profile according to any one of the previous claims, **characterised in that** said actuating means are of an electric, electromechanical, piezoelectric, pneumatic or Shape Memory Alloy, SMA, type.

8. Aerodynamic profile according to any one of claims 2 to 7, **characterised in that** said first (5) and/or second actuating means are adapted to apply an actuation of a linear type.

9. Aerodynamic profile according to claim 8, **characterised in that** said first (5) and/or second actuating means comprise at least one linear actuator (9) having a first end (9a) connected to a related supporting profile and a second end (9b) connected to said spar (7).

10. Aerodynamic profile according to any one of claims 2 to 7, **characterised in that** said first (5) and/or second actuating means are adapted to apply an actuation of a rotary type.

11. Aerodynamic profile according to claim 10, **characterised in that** said first (5) and/or second actuating means comprise at least one motor (11) integral with said supporting profile, said motor (11) having at least one driving crown (13) meshing with at least one sector (15) of driven crown integral with said spar (7) and having a rotation axis coincident with said rotation axis (R-R).

12. Aerodynamic profile according to claim 10, **characterised in that** said first (5) and/or second actuating means comprise at least one motor (17) integral with said spar (7), said motor (17) having at least one driving crown (19) meshing with at least one sector (21) of driven crown integral with said supporting profile and having a rotation axis coincident with said rotation axis (R-R).

13. Aerodynamic profile according to claim 10, **characterised in that** said first (5) and/or second actuating means comprise at least one motor (23) integral with said supporting profile, said motor (23) having at least one driving crown (25) meshing with at least one driven crown (27) integral with said spar (7) and having a rotation axis coincident with said rotation axis (R-R), said supporting profile cooperating with said spar (7) by interposing a least two idle crowns (29) connected to said supporting profile and meshing with said driven crown (27).

## Patentansprüche

1. Aerodynamisches Profil mit mindestens einem aerodynamischen Profilteil (1), das aus mindestens einem ersten Trägerprofil (3a) und mindestens einem zweiten Trägerprofil (3b) besteht, die mindestens eine Beschichtungsmaterialschicht des genannten aerodynamischen Profilteils (1) tragen, und die genannte Beschichtungsmaterialschicht ist ein beständiges und durch Torsion und Traktion/Kompression verformbares Material, der genannte aerodynamische Profilteil (1) schließt außerdem mindestens erste Antriebselemente (5) ein, die dazu dienen, mit mindestens einem der genannten Trägerprofile (3a) oder (3b) zusammenzuarbeiten, um |Δθ| einen Befestigungswert |θ| des genannten Profils im Verhältnis zu einem anderen Trägerprofil im Bereich von mindestens einer Drehachse (R-R) zu ändern, die parallel zu einer Öffnung (A) des genannten aerodynamischen Profilteils (1) liegt, das genannte Trägerprofil (3a, 3b) ist mindestens eine Formrippe, um eine angemessene Form des genannten aerodynamischen Profilteils (1) zu profilieren; die genannten Trägerprofile (3a, 3b) sind strukturell durch mindestens einen Längsträger (7) verbunden, der koaxial zur genannten Drehachse (R-R) liegt; und **dadurch gekennzeichnet ist, dass** das aerodynamische Profil außerdem dritte Antriebselemente einschließt, und dass der genannte aerodynamische Profilteil (1) mit den dritten Antriebselementen zusammenarbeitet, die dazu dienen, den genannten aerodynamischen Profilteil (1) vollständig um die genannte Drehachse (R-R) zu drehen, um |Δα| einen Abstandswert |α| des genannten aerodynamischen Profilteils (1) zu ändern; mindestens ein Ende des genannten Längsträgers (7) ist operativ mit den genannten dritten Antriebselementen verbunden, um die genannte Drehung (-Δα, Δα) zur Änderung des genannten Abstandes zu ermöglichen.

2. Aerodynamisches Profil gemäß Patentanspruch 1, das **dadurch gekennzeichnet ist, dass** das genannte aerodynamische Profil (1) die genannten ersten Antriebselemente (5) einschließt, die dazu dienen, mit mindestens einem der genannten Trägerprofile (3a) oder (3b) zusammenzuarbeiten, um |Δθ| den genannten Befestigungswert |θ| des genannten Profils (3b) zu ändern, und dadurch dass der genannte aerodynamische Profilteil (1) zweite Antriebselemente einschließt, die dazu dienen, mit dem anderen der genannten Trägerprofile (3b) oder (3a) zusammenzuarbeiten, um |Δθ'| einen Befestigungswert |θ'| des genannten Profils (3a) im Verhältnis zum anderen Trägerprofil (3b) im Bereich der genannten Drehachse (R-R) zu ändern.

3. Aerodynamisches Profil gemäß Patentanspruch 2, das **dadurch gekennzeichnet ist, dass** das genannte erste und zweite Antriebselement dazu dienen, ein entsprechendes Trägerprofil (3a, 3b) um den gleichen Winkel |Δα| zu drehen, um einen Abstandswert |α| des genannten aerodynamischen Profils (1) zu ändern.

4. Aerodynamisches Profil gemäß einem beliebigen der vorhergehenden Patentansprüche, das **dadurch gekennzeichnet ist, dass** es aus mehreren der genannten aerodynamischen Profilteile (1) besteht, die untereinander verbunden und in Serie längs einer gemeinsamen Drehachse (R-R) angebracht sind.

5. Aerodynamisches Profil gemäß einem beliebigen der vorhergehenden Patentansprüche, das **dadurch gekennzeichnet ist, dass** es ein aeronautischer oder der Propellerflügel eines Windgenerators ist.

6. Aerodynamisches Profil (1) gemäß einem der Patentansprüche von 1 bis 4, das **dadurch gekennzeichnet ist, dass** es ein Flügelprofil ist.

7. Aerodynamisches Profil gemäß einem beliebigen der vorhergehenden Patentansprüche, das **dadurch gekennzeichnet ist, dass** die genannten Antriebselemente elektrisch, elektromechanisch, piezoelektrisch, pneumatisch sind oder aus Formgedächtnislegierungen (Shape Memory Alloy (SMA)) hergestellt werden.

8. Aerodynamisches Profil gemäß einem beliebigen der vorhergehenden Patentansprüche von 2 bis 7, das **dadurch gekennzeichnet ist, dass** die genannten ersten (5) und/oder zweiten Antriebselemente dazu dienen, einen linearen Antrieb anzuwenden.

9. Aerodynamisches Profil gemäß Patentanspruch 8, das **dadurch gekennzeichnet ist, dass** die genannten ersten (5) und/oder zweiten Antriebselemente mindestens einen linearen Antrieb (9) einschließen, dessen erstes Ende (9a) mit einem entsprechenden Trägerprofil verbunden ist, und dessen zweites Ende (9b) mit dem genannten Längsträger (7) verbunden ist.

10. Aerodynamisches Profil gemäß einem beliebigen der vorhergehenden Patentansprüche von 2 bis 7, das **dadurch gekennzeichnet ist, dass** die genannten ersten (5) und/oder zweiten Antriebselemente dazu dienen, einen Drehantrieb anzuwenden.

11. Aerodynamisches Profil gemäß Patentanspruch 10, das **dadurch gekennzeichnet ist, dass** die genannten ersten (5) und/oder zweiten Antriebselemente mindestens einen Motor (11) einschließen, der ein Stück mit dem genannten Trägerprofil bildet, der genannte Motor (11) hat mindestens einen Antriebskranz (13), der in mindestens einen angetriebenen Kranzsektor (15) eingreift, welcher ein Stück mit dem genannten Längsträger (7) bildet und eine Drehachse hat, die mit der genannten Drehachse (R-R) übereinstimmt.

12. Aerodynamisches Profil gemäß Patentanspruch 10, das **dadurch gekennzeichnet ist, dass** die genannten ersten (5) und/oder zweiten Antriebselemente mindestens einen Motor (17) einschließen, der ein Stück mit dem genannten Längsträger bildet, der genannte Motor (17) hat mindestens einen Antriebskranz (19), der in mindestens einen angetriebenen Kranzsektor (21) eingreift, welcher ein Stück mit dem genannten Trägerprofil bildet und eine Drehachse hat, die mit der genannten Drehachse (R-R) übereinstimmt.

13. Aerodynamisches Profil gemäß Patentanspruch 10, das **dadurch gekennzeichnet ist, dass** die genannten ersten (5) und/oder zweiten Antriebselemente mindestens einen Motor (23) einschließen, der ein Stück mit dem genannten Trägerprofil bildet, der genannte Motor (23) hat mindestens einen Antriebskranz (25), der in mindestens einen angetriebenen Kranzsektor (27) eingreift, welcher ein Stück mit dem genannten Längsträger (7) bildet und eine Drehachse hat, die mit der genannten Drehachse (R-R) übereinstimmt, das genannte Trägerprofil arbeitet mit dem genannten Längsträger (7) durch Dazwischenführen von mindestens zwei Leerlaufkränzen (29) zusammen, die mit dem genannten Trägerprofil verbunden sind und in den genannten angetriebenen Kranz (27) eingreifen.

## Revendications

1. Profil aérodynamique comprenant au moins une portion de profil aérodynamique (1) composée au moins d'un profilé de support (3a) et au moins d'un second profilé de support (3b) qui soutiennent au moins une couche de matériau de revêtement de la portion de profil aérodynamique (1) ; la couche de matériau de revêtement étant constituée d'un matériau résistant et déformable en torsion et en traction/compression ; la portion de profil aérodynamique (1) comprend au moins des premiers moyens actionneurs (5) en mesure de coopérer avec au moins l'un des profilés de support (3a) ou (3b) pour modifier |Δθ| une valeur de calage |θ| de ce profilé par rapport à l'autre profilé de support autour d'un axe de rotation (R-R), au moins, parallèle à une ouverture (A) de la portion de profil aérodynamique (1) ; le profilé de support (3a, 3b) étant au moins un cintre moulé pour profiler une forme adéquate de la portion de profil aérodynamique (1) ; les profilés de support (3a, 3b) sont structurellement unis par au moins un longeron de support (7) coaxial à l'axe de rotation (R-R) ; **caractérisé en ce que** :
le profil aérodynamique comprend par ailleurs des troisièmes moyens actionneurs et la portion de profil aérodynamique (1) coopère avec les troisièmes moyens actionneurs en mesure de faire tourner de manière intégrale la portion de profil aérodynamique (1) autour de l'axe de rotation (R-R) pour modifier |Δα| une valeur de pas |α| de la portion de profil aérodynamique (1) ; au moins une extrémité du longeron (7) est reliée aux troisièmes moyens actionneurs pour permettre la rotation (-Δα, Δα) de modification du pas.

2. Profil aérodynamique, selon la revendication 1, **caractérisé en ce que** la portion de profil aérodynamique (1) comprend les premiers moyens actionneurs (5) en mesure de coopérer avec l'un des profilés de support (3a) ou (3b) pour modifier |Δθ| la valeur de calage |θ| du profilé (3b), et **en ce que** la portion de profil aérodynamique (1) comprend des seconds moyens actionneurs en mesure de coopérer avec l'autre profilé de support (3b) ou (3a) pour modifier |Δθ'| une valeur de calage |θ'| du profilé (3a) par rapport à l'autre profilé de support (3b) autour de l'axe de rotation (R-R).

3. Profil aérodynamique, selon la revendication 2, **caractérisé en ce que** les premiers et les seconds moyens actionneurs peuvent faire tourner un profilé de support respectif (3a, 3b) d'un même angle |Δα| pour modifier une valeur de pas |α| de la portion de profil aérodynamique (1).

4. Profil aérodynamique selon n'importe quelle revendication précédente, **caractérisé en ce qu'**il est composé d'une pluralité de portions de profil aérodynamique (1) reliées entre elles et disposées en série le long d'un axe commun de rotation (R-R).

5. Profil aérodynamique selon n'importe quelle revendication précédente, **caractérisé en ce qu'**il s'agit d'une pale d'hélice aéronautique ou aérogénérateur.

6. Profil aérodynamique selon l'une des revendications de 1 à 4, **caractérisé en ce qu'**il s'agit d'un cerf-volant éolien.

7. Profil aérodynamique selon n'importe quelle revendication précédente, **caractérisé en ce que** les moyens actionneurs sont de type électrique, électromécanique, piézoélectrique, pneumatique ou Shape Memory Alloy, SMA.

8. Profil aérodynamique selon l'une des revendications de 2 à 7, **caractérisé en ce que** les premiers (5) et/ou seconds moyens actionneurs sont en mesure d'appliquer une activation de type linéaire.

9. Profil aérodynamique, selon la revendication 8, **caractérisé en ce que** les premiers (5) et/ou seconds moyens actionneurs comprennent au moins un actionneur linéaire (9) ayant une première extrémité (9a) reliée à un profilé de support relatif et une seconde extrémité (9b) reliée au longeron (7).

10. Profil aérodynamique selon l'une des revendications de 2 à 7, **caractérisé en ce que** les premiers (5) et/ou seconds moyens actionneurs sont en mesure d'appliquer une activation de type rotationnel.

11. Profil aérodynamique, selon la revendication 10, **caractérisé en ce que** les premiers (5) et/ou seconds moyens actionneurs comprennent au moins un moteur (11) solidaire du profilé de support, ce moteur (11) possède au moins une couronne motrice (13) s'engrainant sur au moins un secteur (15) de couronne conduite solidaire du longeron (7) et dont l'axe de rotation coïncide avec le susdit axe de rotation (R-R).

12. Profil aérodynamique, selon la revendication 10, **caractérisé en ce que** les premiers (5) et/ou seconds moyens actionneurs comprennent au moins un moteur (17) solidaire du longeron (7), ce moteur (17) possède au moins une couronne motrice (19) s'engrainant sur au moins un secteur (21) de couronne conduite solidaire du profilé de support et dont l'axe de rotation coïncide avec le susdit axe de rotation (R-R).

13. Profil aérodynamique, selon la revendication 10, **caractérisé en ce que** les premiers (5) et/ou seconds moyens actionneurs comprennent au moins un moteur (23) solidaire du profilé de support, ce moteur (23) possède au moins une couronne motrice (25) s'engrainant sur au moins une couronne conduite (27) solidaire du longeron (7) et dont l'axe de rotation coïncide avec le susdit axe de rotation (R-R), le profilé de support coopère avec le longeron (7) à travers l'interposition au moins de deux couronnes folles (29) reliées au profilé de support et s'engrainant sur la couronne dentée (27).
